# EUROPEAN PATENT APPLICATION

(11) **EP 0 706 848 A1**
(43) Date of publication of application: **17.04.1996**
(21) Application number: 95912433.0
(22) Date of filing: 16.03.1995
(51) Int. Cl.: B23H 7/02

(54) **WIRE ELECTRIC DISCHARGE MACHINE AND WORKING METHOD BY THE WIRE ELECTRIC DISCHARGE MACHINE**

(30) Priority: 29.03.1994 JP 81153/94
(71) Applicant: FANUC LTD., Minamitsuru-gun, Yamanashi 401-05 (JP)
(72) Inventor: SATO, Hiroshi, FANUC Dailvirakaramatsu, Yamanashi 401 (JP)
(74) Representative: Billington, Lawrence Emlyn
(86) International application number: JP9500452
(87) International publication number: WO9526250

(57) **Abstract**

A wire electric discharge machine comprising contact point output means 2 for outputting a point of time at which a wire electrode and an end face of a workpiece contact each other, supply stable state point output means 3 for outputting a point of time at which the supply of machining liquid to a machining position of the wire electrode is stabilized, and modifying means 1 for modifying the machining conditions of the wire electric discharge machine in accordance with the outputs of the contact time output means and supply stable state point output means, wherein the machining conditions is automatically modified at the point of time at which the wire electrode and the end face of the workpiece contact each other which is detected by measuring the voltage between the wire electrode and the workpiece; the machining conditions are modified to conditions providing lower power at the time of the contact; the distance of the wire electrode from the end face of the workpiece is detected and compared with a preset distance; in accordance with the comparison result, a point of time at which the supply of the machining liquid to the machining position of the wire electrode is stabilized is set; and the modified machining conditions are restored to original conditions at the time of stabilization, whereby, even when machining operation has to be started from a state in which the supply of the machining liquid is insufficient such that the machining operation has to be started with the wire electrode located at a peripheral edge of the workpiece, the machining operation can be stably started by means of automatic modification of the machining conditions.

## Description

### Technical Field

The present invention relates to a wire electric discharge machine and a machining method therefor, and more particularly, to a wire electric discharge machine and a machining method therefor applicable to the case where electric discharge machining is started with an insufficient supply of machining liquid.

### Background Art

When machining a workpiece by means of a wire electrode of a wire electric discharge machine, a machining liquid is supplied from a nozzle or the like to the spot of contact between the wire electrode and the workpiece. Insufficient supply of the machining liquid will cause a higher probability of having the wire electrode broken.

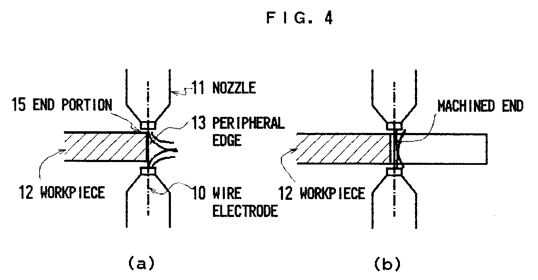

When machining is performed on a peripheral edge portion of a workpiece as in the case of starting machining operation from an end face of the workpiece or from a large machining start hole, sometimes the supply of machining liquid from the nozzle to the wire electrode will become insufficient. FIG. 4 illustrates the manner how the machining liquid is supplied. FIG. 4(a) shows, by way of example, a state in which a wire electrode 10 is in contact with a peripheral edge 13, such as an end face, a large machining start hole or the like, of a workpiece 12. In this case, part of the machining liquid supplied from a nozzle 11 is made to change the direction of its flow as it flows against an upper end 15 of the workpiece 12. This change in the direction of flow causes an insufficient supply of the machining liquid to the wire electrode 10, making the wire electrode prone to be broken.

FIG. 4(b) shows a state in which the wire electrode 10 is located well inside the workpiece 12. In this case, the machining liquid supplied from the nozzle 11 flows stably to the wire electrode, and thus the susceptibility of the wire electrode to the break will be reduced.

Therefore, when the machining has to be started from a position where the supply of the machining liquid to the wire electrode is insufficient, such as a peripheral edge of a workpiece, it is necessary that the power be lowered by modifying the machining conditions until the supply of the machining liquid is stabilized, in order to prevent the break of the wire electrode.

Conventionally, the machining conditions are altered manually or through a program change until the supply of the machining liquid is stabilized.

It is, however, difficult for beginners to modify the machining conditions because the kinds of items to be set are large in number. Further, to manually modify the machining conditions, the operator is required to adjust the machine until the machining operation is stabilized, and modifying the machining conditions through a program change will give rise to a problem that the program becomes complicated.

### Disclosure of the Invention

It is an object of the present invention to provide a wire electric discharge machine and electric discharge machining method capable of automatically modifying machining conditions for starting a stable electric discharge machining even in cases where the electric discharge machining has to be started from a state in which the supply of machining liquid to a wire electrode is insufficient such that the electric discharge machining has to be started from a peripheral edge of a workpiece.

The above object of the present invention relating to a machining method for a wire electric discharge machine is achieved by automatically modifying machining conditions from a point of time at which a wire electrode and an end face of a workpiece contact each other until a point of time at which supply of machining liquid to a machining position of the wire electrode becomes stable.

The machining conditions modifiable by the method of the present invention include ON-state period, OFF-state period, and machining liquid quantity.

In the machining method for a wire electric discharge machine according to the present invention, the point of time at which the wire electrode and the end face of the workpiece contact each other may be obtained by detecting a voltage between the wire electrode and the workpiece. Also, the point of time at which the supply of the machining liquid to the machining position of the wire electrode becomes stable can be obtained by detecting a distance of the wire electrode from the end face of the workpiece. The distance of the wire electrode from the end face of the workpiece can be detected as a distance over which the wire electrode is moved relative to the workpiece.

Further, the machining conditions once modified can be restored to original conditions after the supply of the machining liquid to the machining position of the wire electrode is stabilized.

The above object of the present invention is also achieved by having a wire electric discharge machine comprises contact time output means for outputting a point of time at which a wire electrode and an end face of a workpiece contact each other, supply stable state output means for outputting a point of time at which supply of machining liquid to a machining position of the wire electrode is stabilized, and modifying means for modifying machining conditions of the wire electric discharge machine in accordance with an output of the contact time output means and an output of the supply stable state point output means.

The contact time output means of the present invention detects change in the voltage between the wire electrode and the workpiece to provide an output. The supply stable state point output means of the present invention detects a distance of the wire electrode from a peripheral edge of the workpiece, and provides an output when the detected distance reaches a set distance. Further, the distance detected by the supply stable state point output means of the present invention is obtained as an amount of movement of moving means for moving the wire electrode or the workpiece. The modifying means of the present invention responds to the output of the supply stabilization point of time output means to restore the once modified original machining conditions in accordance with the output of the contact time output means.

According to a specific embodiment of the present invention, a power source voltage applied between the wire electrode and the workpiece is detected to thereby detect the voltage between the wire electrode and the workpiece, and a point of time at which the wire electrode and the end face of the workpiece contact each other is obtained and output based on the detected voltage.

In the wire electric discharge machine according to the present invention, the machining conditions are automatically modified by obtaining the point of time at which the wire electrode and the end face of the workpiece contact each other through detection of the voltage between the wire electrode and the workpiece; the machining conditions are modified to conditions providing lower power at the time of the contact; the distance of the wire electrode from the end face of the workpiece is detected to compare the detected distance with a preset distance; in accordance with the result of comparison, a point of time at which the supply of the machining liquid to the machining position of the wire electrode is stabilized is set; and the modified machining conditions is restored to original conditions at the time of stabilization.

The modifying means modifies the machining conditions, and the machining conditions modifiable by the modifying means include, for example, a no-load voltage, an ON-state period corresponding to the pulse width of a current supplied between the electrodes, an OFF-state period during which no pulse is applied between the electrodes, a supply quantity of machining liquid, a servo voltage for controlling a servo feed, a wire travel speed, and a wire tension. The machining conditions are sent to means, which directly control the individual machining conditions of the electric discharge machine, to carry out machining operation according to such machining conditions. Among the above machining conditions, the ON-state period, the OFF-state period, and the machining liquid quantity are principal conditions that affect stable start of machining operation which is necessary for preventing the break of the wire electrode.

The machining condition modifying means is connected to the contact point of time detecting means and the supply stable state point output means. The contact point of time detecting means detects a point of time at which the supply of machining liquid from a nozzle to the wire electrode becomes insufficient, by detecting a point of time at which the wire electrode comes into contact with a peripheral edge of a workpiece, such as an end face or large initial machining hole of the workpiece. In accordance with a detection signal from this detecting means, the machining condition modifying means starts modifying the machining conditions.

The supply stable state point output means obtains a point of time at which the supply of machining liquid from the nozzle to the wire electrode is stabilized. In accordance with an output signal from this output means, the machining condition modifying means restores the modified machining conditions to the previous conditions. The supply stable state point output means obtains the supply stable state point by, for example, detecting the distance of the wire electrode from the end face of the workpiece by means of distance detecting means, comparing the detected distance with a set distance by means of comparing means, and judging that the supply stable state point is reached when the set distance is exceeded. The distance of the wire electrode from the end face of the workpiece can be obtained by detecting a distance over which the wire electrode has moved relative to the workpiece on the basis of the amount of drive of a drive unit such as an X-Y table.

### Brief Description of the Drawings

FIG. 1 is a block diagram showing an example of configuration for carrying out the present invention;
FIG. 2 is a block diagram of a principal part of an NC device for carrying out the present invention;
FIG. 3 is a flowchart illustrating the procedure of a machining method for a wire electric discharge machine according to the present invention;
FIG. 4 is a diagram illustrating how the machining liquid is supplied;
FIG. 5 is a diagram illustrating ON-state period changes;
FIG. 6 is a diagram illustrating OFF-state period changes;
FIG. 7 is a diagram illustrating changes of the ON-state period and OFF-state period;
FIG. 8 is a diagram illustrating machining conditions stored in memory of the wire electric discharge machine according to the present invention;
FIG. 9 is a diagram illustrating machining conditions stored in memory of the wire electric discharge machine according to the present invention;
FIG. 10 is a diagram showing an example of machining processes according to the present invention;
FIG. 11 is a diagram showing another example of machining processes according to the present invention;
FIG. 12 is a diagram showing still another example of machining processes according to the present invention; and
FIG. 13 is a diagram showing a further example of machining processes according to the present invention.

### Best Mode of Carrying out the Invention

The embodiments of the present invention will be described in detail with reference to the drawings.

### (Exemplary Configuration for Carrying out the Present Invention)

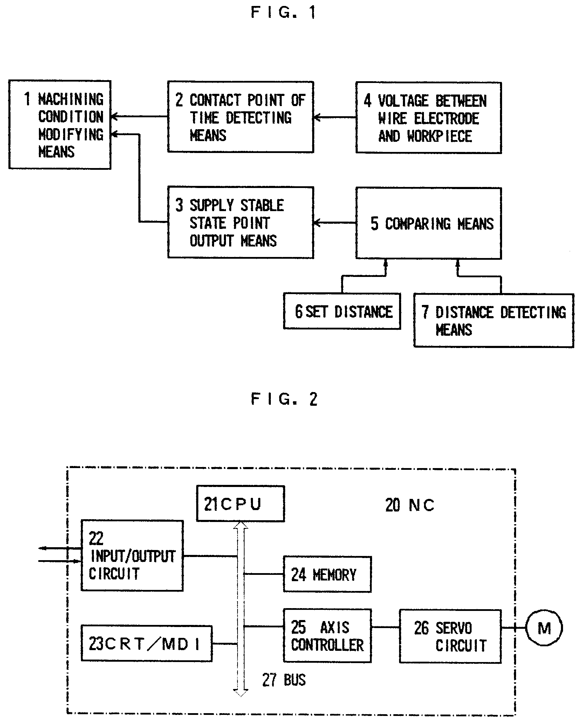

First, an example of configuration for carrying out the present invention will be explained with reference to the block diagram of FIG. 1.

In FIG. 1, machining condition modifying means 1 modifies the electric discharge machining conditions for an electric discharge machine. The process of modifying the machining conditions includes a step of restoring the original machining conditions which have once been modified.

The machining conditions which can be modified by the machining condition modifying means 1, include, for example, a no-load voltage which is a voltage applied between electrodes formed by a wire electrode and a workpiece, an ON-state period corresponding to the pulse width of a current for causing an electric discharge to be produced when a pulse voltage is applied between the electrodes, an OFF-state period during which no pulse voltage is applied between the electrodes, a quantity of machining liquid supplied between the electrodes, a servo voltage for controlling a servo feed to move the wire electrode or workpiece, a wire travel speed determining the feed speed of the wire electrode, and a wire tension determining the degree of tension of the wire electrode. The machining conditions set by the machining condition modifying means 1 are supplied to means (not shown), which directly control the individual machining conditions of the electric discharge machine, to carry out machining operation according to the set machining conditions. Among the above machining conditions, the ON-state period, the OFF-state period, and the machining liquid quantity are principal conditions affecting stable start of machining operation without having the wire electrode broken. Therefore, in the following, the conditions of ON-state period, OFF-state period and machining liquid quantity among the various machining conditions will be explained.

The machining condition modifying means 1 is connected to contact point detecting means 2 and supply stable state point output means 3. The contact time detecting means 2 detects a point of time at which the supply of machining liquid from a nozzle to the wire electrode becomes insufficient. More specifically, the detecting means 2 detects a point of time at which the wire electrode comes into contact with a peripheral edge of a workpiece, such as an end face or large machining start hole of the workpiece. Responding to the detection signal from the means 2, the machining condition modifying means 1 starts modifying the machining conditions.

The supply stable state point output means 3 outputs a point of time at which the supply of machining liquid from the nozzle to the wire electrode becomes stable. The machining conditions modifying means 1 restores the previous or unmodified machining conditions in response to this output signal. The supply stable state point output means 3 obtains the supply stable state point of the machining liquid by, for example, by detecting a distance of the wire electrode from an end face of the workpiece by means of distance detecting means 7, compares the detected distance with a set distance 6 by means of comparing means 5 to find the supply stable state point by defining the supply stable state point as being the point at which the detected distance excess the predetermined distance. The distance detecting means can obtain the distance of the wire electrode from the end face of the workpiece by detecting the distance over which the wire electrode has moved relative to the workpiece on the basis of the amount of operation of a drive unit such as an X-Y table.

FIG. 2 is a block diagram showing a principal part of an NC 20. As shown in FIG. 2, a central processing unit (hereinafter referred to as CPU) 21 is connected via a bus 27 to an input/output circuit 22, a manual data input device with a CRT display (hereinafter referred to as CRT/MDI) 23, a memory 24 comprising a ROM storing a control program, a nonvolatile RAM, etc. for storing a machining program, various set values, temporary storage data and machining conditions, and an axis controller 25 including an interpolator. The CPU 21 outputs pulses for controlling the servo voltage, ON-state period, and OFF-state period, and is supplied with a difference voltage between the interelectrode voltage and the servo voltage, a machining current, etc., via the input/output circuit 22.

With the arrangement described above, a machining program for the NC, which is input from storage means or the like or is created and entered by means of the CRT/MDI 23, is stored in the memory 24, and electric discharge machining is carried out by reading the program from the memory 24.

The memory 24 stores in advance machining conditions to be applied when the supply of machining liquid from the nozzle to the wire electrode is insufficient, and machining conditions to be applied when the supply of the machining liquid is stable according to materials to be machined and various diameters of wire electrodes. At the time of machining, conditions such as the material of the workpiece and the diameter ⌀ of the wire electrode are entered from the CRT/MDI 23, whereupon the CPU 21 selects the machining conditions to be used, in accordance with the entered conditions, from among the stored electric discharge machining conditions.

### (Operation of the Embodiment According to the Present Invention)

The operation of the embodiment according to the present invention will be described.

The machining conditions modifiable during the wire electric discharge machining according to the present invention include various conditions such as the no-load voltage, ON-state period, OFF-state period, machining liquid quantity, servo voltage, wire travel speed, wire tension, etc. , as mentioned above. Among these, the ON-state period, OFF-state period and machining liquid quantity are principal conditions for assuring stable start of machining operation without causing the break of the wire electrode. Therefore, in the following, conditions of ON-state period, OFF-state period and machining liquid quantity will be explained individually.

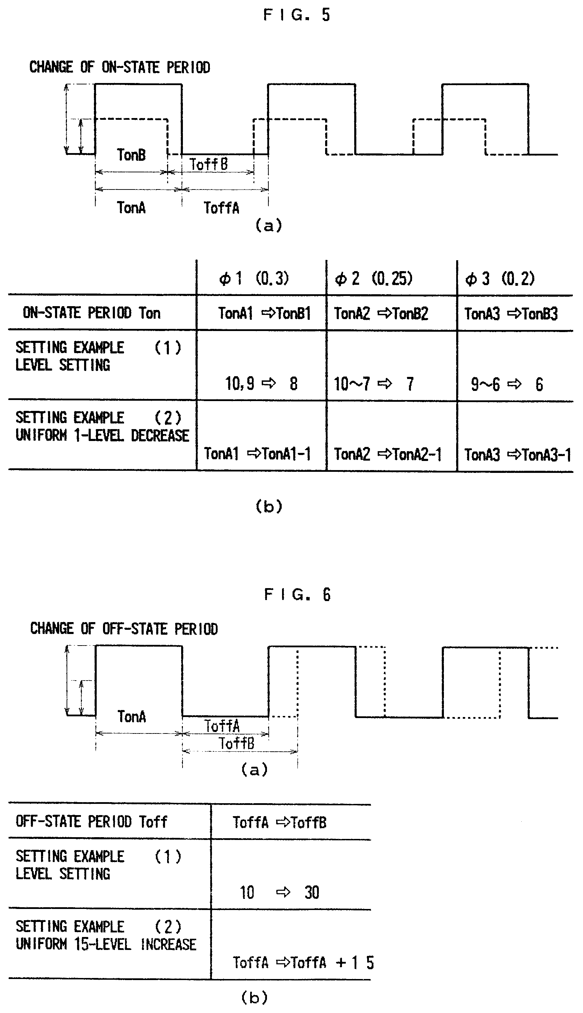

First, the ON-state period will be explained with reference to the diagram and table of FIG. 5 illustrating how the ON-state period is changed. The ON-state period represents a time interval during which discharge current is supplied between the electrodes in the case where discharge control is executed by applying a pulse voltage between the electrodes. In FIG. 5, the ON-state period corresponds to the time interval indicated by Ton. In Fig. 5(a), the ON-state period TonA, indicated by the solid line, illustrates the case where the supply of machining liquid from the nozzle to the wire electrode is stable. The ON-state period TonB indicated by the broken line represents the ON-state period which is obtained by modifying the machining condition because of an insufficient supply of the machining liquid from the nozzle to the wire electrode.

The longer the ON-state period, the intenser the electric discharge becomes; therefore, the machining power must be lowered when the supply of the machining liquid from the nozzle to the wire electrode is insufficient, in order to prevent the break of the wire electrode. Accordingly, the interval of the ON-state period Ton is reduced from TonA to TonB. Alternatively, the machining power may be lowered by decreasing the voltage during the ON-state period TonB.

For the OFF-state period Toff, the illustrated example shows the case where the time interval remains unchanged even when the supply of the machining liquid from the nozzle to the wire electrode is insufficient.

The ON-state period can be set by numerically, and is normally set by specifying a numerical value between 0 and 10. In this case, the larger the set value, the intenser the electric discharge becomes; therefore, a smaller value is set when the supply of the machining liquid from the nozzle to the wire electrode is insufficient. The value of ON-state period can be varied based on the diameter ⌀ of the wire electrode used for the electric discharge machining.

In the following, setting example of the ON-state period in the case of an insufficient supply of the machining liquid from the nozzle to the wire electrode is explained with reference to the table in FIG. 5(b).

Setting example (1): The setting (1) indicates an example in which the value to which the ON-state period Ton is changed is previously determined in accordance with the diameter ⌀ of each wire electrode. For example, in the case where the diameter ⌀ is 0.3 mm, the value 10 or 9 is set for normal machining, and for a machining operation in which the supply of the machining liquid from the nozzle to the wire electrode becomes insufficient, the set value is reduced to 8. In the case where the diameter ⌀ is 0.2 mm, a value between 9 and 6 is set for normal machining, and for a machining operation in which the supply of the machining liquid from the nozzle to the wire electrode becomes insufficient, the set value is reduced to 6. The ON-state period may be preset in memory or be set via the input/output circuit. Setting the ON-state period via the input/output circuit produces an effect that the ON-state period setting can easily be adjusted in accordance with a change of the diameter or modifications of other conditions.

Setting example (2): This an example of a case where the value to which the value of the ON-state period Ton is to be varied is set by uniformly decreasing the OFF-state period to a preset level value. For example, in the case where the diameter ⌀ is 0.3 mm, normal machining is carried out with the ON-state period set to TonA1, and for a machining operation in which the supply of the machining liquid from the nozzle to the wire electrode is insufficient, a uniform reduction level value of 1 is applied, that is, the ON-state period is reduced to TonA1 - 1 by subtracting 1 from TonA1. Similarly, in the case where the diameter ⌀ is 0.2 mm, the ON-state period is set to TonA3 - 1 by subtracting 1 from TonA3.

The value of reduction level value to be applied can be set as desired, and may be determined in accordance with a level value setting range etc.

All values for the ON-state period may be preset in memory, or both the normally used values and the value to be reduced may be stored in memory so that the varied value can be obtained by calculation. To obtain the modified value by calculation, the amount of data to be stored in memory can be reduced, and also the varied value itself can be varied further by varying the reduction level value.

In FIG. 6(a), the solid line indicates an OFF-state period ToffA applied in the case where the supply of the machining liquid from the nozzle to the wire electrode is stable, and the broken line indicates an OFF-state period ToffB applied in the case where the machining condition has been modified because of an insufficient supply of the machining liquid from the nozzle to the wire electrode.

Generally, the longer the OFF-state period, the lower the electric discharge power becomes. Therefore, when the supply of the machining liquid from the nozzle to the wire electrode is insufficient, the machining power can be lowered by adjusting the OFF-state period, in order to prevent the break of the wire electrode. To this end, the interval of the OFF-state period Toff is prolonged from ToffA to ToffB.

Further, the example of FIG. 6 illustrates the case where the interval of the ON-state period Ton remains unchanged even when the supply of the machining liquid from the nozzle to the wire electrode is insufficient.

The OFF-state period can be set numerically by specifying a value within a range of 1 to 199, for example. This value is increased when the supply of the machining liquid from the nozzle to the wire electrode is insufficient. The value to which the OFF-state period is to be varied can be determined based on the diameter ⌀ of the wire electrode used for the electric discharge machining.

In the following, exemplary setting of the OFF-state period in the case of an insufficient supply of the machining liquid from the nozzle to the wire electrode will be explained with reference to the table (b) of FIG. 6.

Setting example (1): The setting (1) indicates an example in which the value to which the OFF-state period Toff is to be changed is determined in advance. For example, if the level value of the OFF-state period during normal machining operation is assumed to be 10, the value of the level value has to be raised to 30 when the supply of the machining liquid from the nozzle to the wire electrode is insufficient.

The increased value can be set as desired, and may be preset in memory or be set via the input/output circuit. Setting the OFF-state period via the input/output circuit is advantageous in that the OFF-state period setting can easily be adjusted in accordance with a change of the diameter or modifications of other conditions.

The OFF-state period may be set in accordance with the diameter ⌀ of the wire electrode used, as in the case of the ON-state period.

Setting example (2): This is an example of a case where the level value to which the value of OFF-state period Toff is to be varied is set by uniformly increasing the OFF-state period to a preset level value. For example, in the case of a machining operation in which the supply of the machining liquid from the nozzle to the wire electrode is insufficient, a uniform increase level value of 15 is applied, that is, the OFF-state period is increased to ToffA + 15 by adding 15 to a level value ToffA.

The increase level value to be applied can be set as desired, and may be determined in accordance with a level value setting range etc.

All values for the OFF-state period may be preset in memory, or both the normally used values and the value to be added can be stored in memory so that the varied value can be calculated. In the case of obtaining the varied value by calculation, the amount of data allowed to be stored in memory can be increased, and also the varied value itself can be varied further by varying the increase level value.

The OFF-state period may be set in accordance with the diameter ⌀ of the wire electrode to be used, as in the case of the ON-state period.

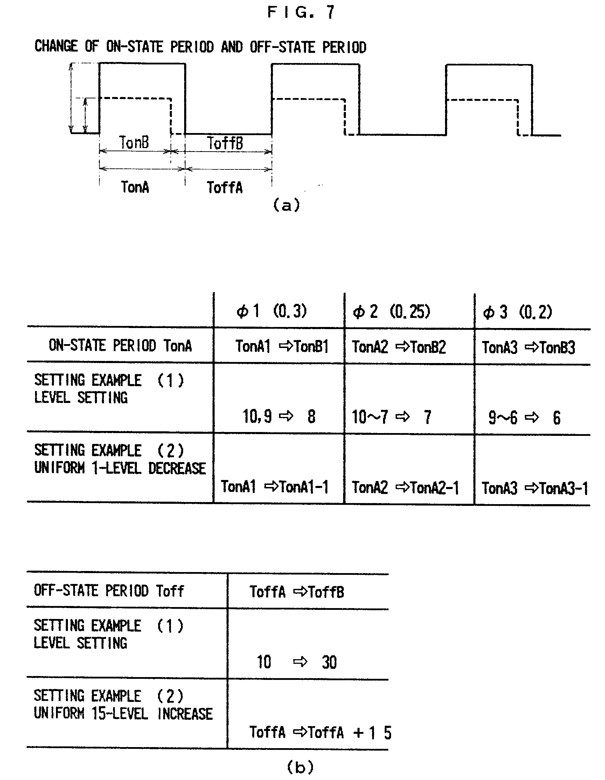

The diagram and tables of FIG. 7 illustrate the case where both the ON-state period and the OFF-state period are varied. In this example, the widths of the ON and OFF times are varied, and Ton and Toff in FIG. 7 represent the intervals of the ON-state period and OFF-state period, respectively.

In FIG. 7(a), the solid line indicates the ON-state period TonA and OFF-state period ToffA applied when the supply of the machining liquid from the nozzle to the wire electrode is stable, and the broken line indicates the ON-state period TonB and OFF-state period ToffB applied when the machining conditions are modified because of an insufficient supply of the machining liquid from the nozzle to the wire electrode.

Where the supply of the machining liquid from the nozzle to the wire electrode is insufficient, the setting such that the interval of the ON-state period Ton is decreased from TonA to TonB while the interval of the OFF-state period Toff is prolonged from ToffA to ToffB will cause the machining power to be lowered, thereby preventing the break of the wire electrode. The machining power can also be lowered by reducing the voltage during the ON-state period TonB.

In this case of setting, the ON-state period setting and the OFF-state period setting, both mentioned above, may be combined as shown in the tables in FIG. 7(b). The ON-state period and OFF-state period in the illustrated example are set in the same manner as described above, and therefore, a description thereof is omitted.

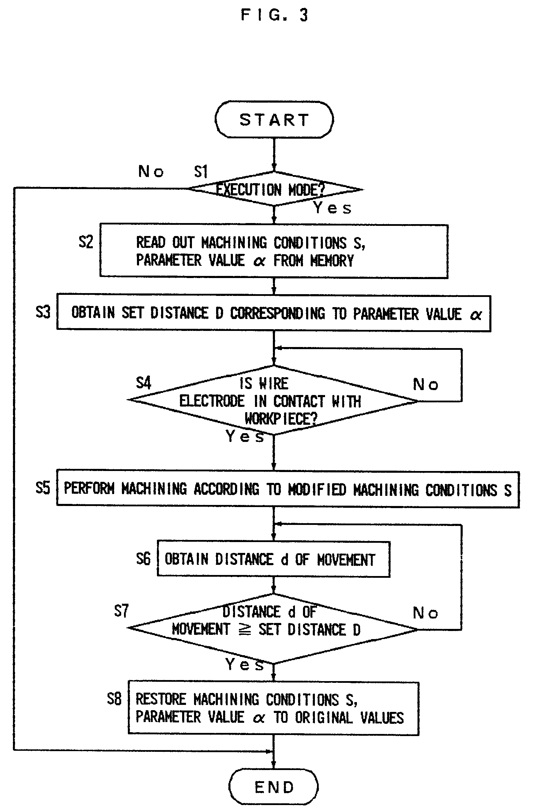

The procedure of a machining method for the wire electric discharge machine according to the present invention will be now described with reference to the flowchart of FIG. 3. In the following, explanation is made in the order of the number of step (S) appearing in the flowchart.

Step S1: First, it is determined whether a mode is specified for the execution of machining according to the machining method of the present invention. This execution mode can be identified by detecting the presence of a specific code representing the execution mode previously inserted in the machining program of the electric discharge machine. For example, M** may be used as a code to represent the execution mode. Alternatively, a valid/invalid item for the execution mode may be displayed on the screen.

If it is found in the determination step that no specific code exists in the program, the automatic modification of the machining conditions will not be made for the wire electric discharge machine of the present invention. On the other hand, if the specific code exists in the program, the machining conditions are automatically modified in the subsequent steps.

Step S2: Then, machining conditions S and a parameter value α , stored in memory, are read.

As previously mentioned, the machining conditions S include various conditions such as the no-load voltage, ON-state period, OFF-state period, machining liquid quantity, servo voltage, wire travel speed and wire tension, for example. In the following description, the conditions of ON-state period, OFF-state period and machining liquid quantity, which are principal conditions for ensuring stable start of machining operation without causing a break of the wire electrode, are taken as examples.

The parameter α is used to set in the supply stable state point output means 3 the point at which the supply of the machining liquid from the nozzle to the wire electrode become stable. For example, the parameter value specifies a set distance between the wire electrode and an end face of the workpiece.

The readout from the memory can be executed by using, as address, data such as the thickness and material of the workpiece entered from the input/output circuit, or the diameter of the wire electrode.

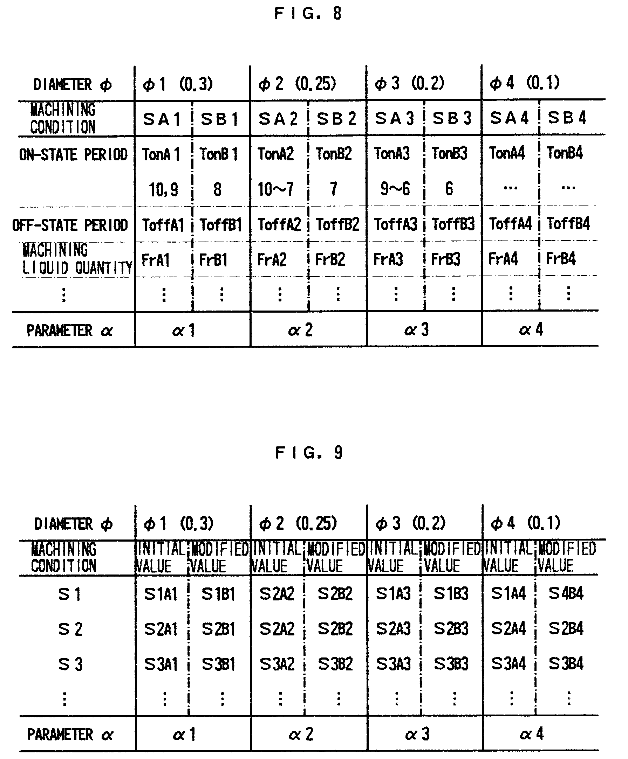

FIGS. 8 and 9 show examples of the machining conditions S and parameter value α stored in the memory.

FIG. 8 illustrates an example in which unmodified and modified values are stored for the ON-state period, OFF-state period, machining liquid quantity, etc., as the machining conditions S, with respect to the individual diameters ⌀ of wire electrodes.

For example, for the diameter ⌀ 1, the unmodified or normal machining conditions are represented by SA1, wherein the ON-state period TonA1 is set to 10 or 9, the OFF-state period is set to ToffA1, and the machining liquid quantity is set to FrA1. The machining conditions to which the conditions are modified when the supply of the machining liquid from the nozzle to the wire electrode is insufficient are represented by SB1, wherein the ON-state period TonB1 is set to 8, the OFF-state period is set to ToffB1, and the machining liquid quantity is set to FrB1. The parameter value α is set to α 1.

Setting the data in memory as shown in the example of FIG. 8 is advantageous in that the machining conditions can be finely modified with ease.

In the example shown in FIG. 9, the ON-state period, OFF-state period, machining liquid quantity, etc. are set as a group of machining conditions S, and by specifying one out of the machining condition groups S1 to Sn, it is possible to set the individual machining conditions, such as the ON-state period, OFF-state period, machining liquid quantity, etc., at a time as a group. Also in this case, unmodified and modified values may be stored depending on the individual diameters ⌀ of wire electrodes.

For the diameter ⌀ 1, for example, as first conditions (indicated by machining conditions S1 in the figure), SA1 is set as a group of unmodified or normal machining conditions (initial values), and SB1 is set as a group of modified values applied when the supply of the machining liquid from the nozzle to the wire electrode is insufficient. The parameter value α is set to α 1.

According to this data setting method, the data items to be set can be treated as a set of data, facilitating the data processing.

Step S3: Using the parameter value α read in Step S2, a set distance D between the wire electrode and the end face of the workpiece is determined. The setting of the distance D is an operation executed by the supply stable state point output means 3, and thus the point of time at which the supply of the machining liquid from the nozzle to the wire electrode is stabilized can be derived.

The set distance D using the parameter value α can be calculated, for example, by multiplying the parameter value α by a proportional constant K. The set distance D is based on a distance over which the wire electrode is to move perpendicularly from the peripheral edge of the workpiece. As shown in FIG. 4(b), the distance D is set when the distance from the position corresponding to the peripheral edge of the workpiece to the position where the nozzle is located well inside the workpiece and the supply of the machining liquid from the nozzle is stabilized. For example, the distance may be set to a value obtained by adding a margin to the diameter of the nozzle. The margin may be determined assuming the case where the wire electrode advances obliquely with respect to the peripheral edge of the workpiece.

The calculation of the set distance D using the parameter value α can be performed by the CPU 21, for example. The set distance D thus calculated is stored in the memory 24 to be used as the set distance 6 shown in FIG. 1.

Step S4: The point to start modifying the machining conditions is set so as to be coincident with the point of time at which the wire electrode comes into contact with the workpiece. Then, to determine the timing for initiating the modification of the machining conditions by means of the machining condition modifying means 1, contact between the wire electrode and the workpiece is detected.

The contact between the wire electrode and the workpiece can be detected by detecting the voltage between the wire electrode and the workpiece by means such as the means for measuring the voltage of the power source by which the voltage is applied across the electrodes. If it is judged in this step that the wire electrode is in contact with the workpiece, the flow proceeds to the subsequent Step S5 in which the machining conditions S are modified and machining is carried out in accordance with the modified machining conditions.

Step S5: Using the time of contact between the wire electrode and the workpiece detected in Step S4 as the timing for starting the modification of the machining conditions, the machining conditions read out in Step S2 are set in devices, not shown, designed for carrying out their respective processes in order to be modified.

Step S6: A distance d from the time of modification of the machining conditions between the wire electrode and the workpiece is determined. The distance of relative movement between the wire electrode and the workpiece can be derived by obtaining the distance over which the drive unit of the wire electrode or the workpiece (e.g., the drive unit of the X-Y stage etc.) has moved. This distance d of movement corresponds to the distance of the wire electrode from the peripheral edge of the workpiece in the case where the wire electrode advances perpendicularly with respect to the workpiece.

The distance d of movement is calculated by the distance detecting means 7 shown in FIG. 1, or by the CPU 21 in the NC apparatus.

Step S7: The distance d of movement obtained in Step S6 is compared with the set distance D obtained in Step S3. This comparison is made by the comparing means 5 shown in FIG. 1, or by the CPU 21 in the NC apparatus.

If, as a result of the comparison, the distance d of movement is found to be greater than or equal to the set distance D, it is judged that the wire electrode is situated adequately inside the workpiece by a distance from the peripheral edge of the workpiece and thus has reached a position at which the supply of the machining liquid from the nozzle is stable. Therefore, the modified machining conditions are restored to their original conditions in the subsequent Step S8.

Step S8: The restoration to the original machining conditions can be achieved by reading out the normal machining conditions stored in the memory 24 and setting these conditions in devices for performing respective processes, not shown.

When the mode requiring the automatic modification of machining conditions is specified in the program, the necessary modification process is executed in Steps S1 through S8, and thereafter, machining operation is continued in accordance with the normal machining conditions until another specific code designating the execution mode, inserted in the program, is detected in Step S1.

### (Examples of Machining)

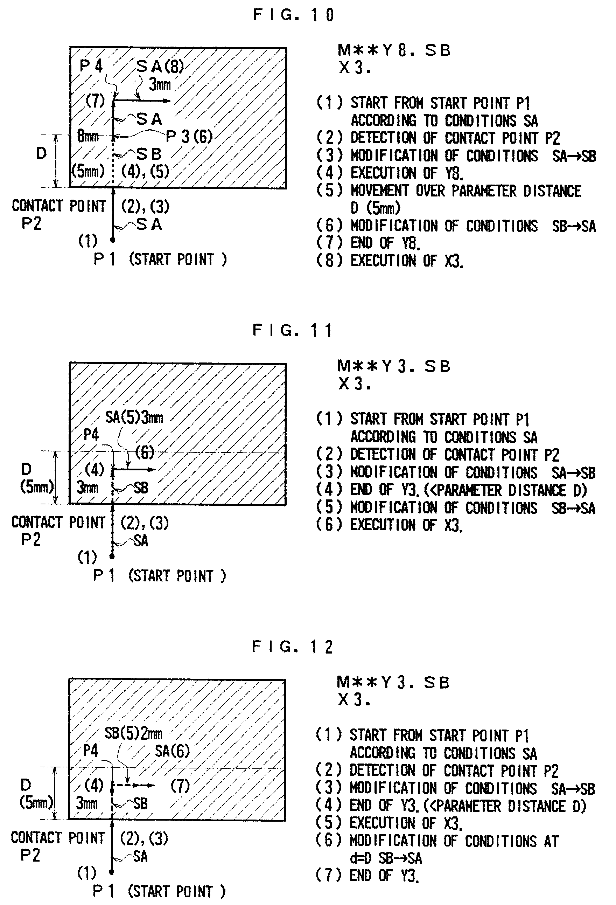

Examples of machining according to the machining method for a wire electric discharge machine of the present invention will be now described with reference to FIGS. 10 through 13. Although the following description is based on the assumption that the wire electrode is moved relative to the workpiece, the present invention is applicable to the case where the workpiece is moved relative to the wire electrode, as well as to the case where both the wire electrode and the workpiece are moved.

In FIGS. 10 through 13, machining operation according to normal machining conditions is indicated by the solid line, and machining operation according to modified machining conditions is indicated by the broken line.

Machining example 1: The machining example shown in FIG. 10 indicates the case wherein the wire electrode is moved from machining initial point P1, contacts the workpiece at point P2, machines the workpiece for 8 mm in Y direction, and then machines the workpiece for 3 mm in X direction from point P4.

The program for carrying out this machining operation is, for example,
M**Y8.
X3.
Instead an M code may be singly commanded as follows:
M**
Y8.
X3.

The valid/invalid item for the execution mode may be set as "VALID" on screen.

In this case, the code M** is the specific code requiring the automatic modification of machining conditions. Symbol Y8. specifies the machining for 8 mm in the Y-axis direction, and X3. specifies the machining for 3 mm in the X-axis direction.

First, the wire electrode advances from the start point P1 to the point P2 to contact with the workpiece in accordance with conditions SA (see (1) in FIG. 10). The time of contact is detected as soon as the wire electrode comes into contact with the workpiece at the contact point P2 (see (2) in FIG. 10), and the machining conditions are changed from SA to SB at this time of contact (see (3) in FIG. 10).

Then, the machining block Y8. is executed from the contact point P2 in accordance with the machining conditions SB (see (4) in FIG. 10). When the amount d of movement of the wire electrode reaches the set distance D (in this case, 5 mm) during the execution of the machining block Y8. (see (5) in FIG. 10), it is judged that the wire electrode has reached a position where the machining liquid is sufficiently supplied to the workpiece, and thus the machining conditions are restored from SB to SA (see (6) in FIG. 10).

After restoring the machining conditions to SA, the remaining part of the machining block Y8. is executed, and upon completion of this machining block (see (7) in FIG. 10), the subsequent machining block X3. is executed (see (8) in FIG. 10).

Machining example 2: The exemplary machining shown in FIG. 11 indicates the case wherein the wire electrode is moved from initial machining point P1, contacts the workpiece at point P2, machines the workpiece for 3 mm in Y direction, and then machines the workpiece for 3 mm in X direction from point P4.

The program for carrying out this machining operation is, for example,
M**Y3.
X3.
Instead, an M code may be singly commanded as follows:
M**
Y3.
X3.

Here, the code M** is the specific code requiring the automatic modification of machining conditions, as in the aforementioned exemplary machining 1, and SB represents modified machining conditions. Symbol Y3. specifies the machining for 3 mm in the Y-axis direction, and X3. specifies the machining for 3 mm in the X-axis direction.

The machining process from the start point P1 to the contact point P2, indicated by (1) to (3) in FIG. 11, is identical with the corresponding process in the exemplary machining 1.

Then, the machining block Y3. is executed from the contact point P2 in accordance with the machining conditions SB (see (4) in FIG. 11). Since the distance d of movement of the wire electrode according to the machining block Y3. is shorter than the set distance D, the machining block Y3. ends before the wire electrode reaches the set distance D, and the subsequent machining block X3. is executed.

Thus, in the exemplary machining 2, the machining conditions are restored from SB to SA at the time when the subsequent machining block is started (see (5) in FIG. 11). In normal machining operation, it is rare that the subsequent machining block is executed before the wire electrode reaches the set distance D from the peripheral edge of the workpiece. Therefore, when the subsequent machining block has to be started before the set distance D is reached, no particular inconveniences arise even if the machining conditions are restored from SB to SA at the start of the subsequent machining block.

After restoring the conditions to SA, the machining block X3. is executed (see (6) in FIG. 11).

Machining example 3: The exemplary machining shown in FIG. 12 indicates the case wherein the wire electrode is moved from initial machining point P1, contacts the workpiece at point P2, machines the workpiece for 3 mm in Y direction, and then machines the workpiece for 3 mm in X direction from point P4, as in the exemplary machining 1.

The program for this machining operation is, for example,
M**Y3.
X3.
Instead, an M code may be singly commanded as follows:
M**
Y3.
X3.

The machining processes from the start point P1 to the contact point P2, indicated by (1) to (3) in FIG. 12, is identical with the corresponding processes in the above examples 1 and 2.

Then, even in this machining example, like in the case of the machining example 2, in the case where the machining block Y3 is to be executed from the contact point 2 according to the machining conditions SB, the distance d to be moved by the wire electrode according to this machining block Y3 is shorter than the set distance D, so that the machining Y3 is shorter than the set distance D, so that the machining Y3 ends before the wire electrode covers the set distance D to enter the new machining block X3 (refer to (4) in the diagram).

In the exemplary machining 3, however, the machining operation is continued in accordance with the machining conditions SB even after the subsequent machining block is started (see (5) in FIG. 12), and when the total distance d from the contact point P2 becomes equal to the set distance D, the machining conditions are restored from SB to SA (see (6) in FIG. 12).

After restoring the machining conditions to SA, the machining block X3 is executed until coming to an end (see (7) in FIG. 12).

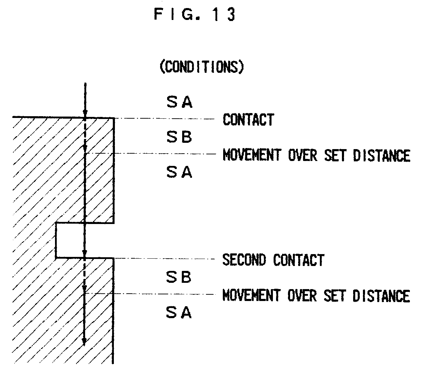

Machining example 4: The exemplary machining shown in FIG. 13 indicates the case wherein the wire electrode contacts the peripheral edge of the workpiece a plurality of times, and at each contact point, the machining is started with an insufficient supply of the machining liquid.

In this case, the machining conditions are changed from SA to SB each time the wire electrode comes into contact with the peripheral edge of the workpiece, and the machining conditions are restored to SA when the set distance D is reached. Thus, each time the supply of the machining liquid becomes insufficient, the machining conditions are modified until the supply of the machining liquid is stabilized, to thereby lower the power and prevent a break of the wire electrode.

As described above, the present invention provides a wire electric discharge machine and a machining method therefor wherein, when machining operation has to be started from a state in which the supply of the machining liquid is insufficient, and machining operation by means of the wire electrode has to be started from a peripheral edge of a workpiece, the machining conditions are automatically modified to ensure stable start of the machining operation.

## Claims

1. A machining method for a wire electric discharge machine, wherein machining conditions are automatically modified from a point of time at which a wire electrode and an end face of a workpiece contact each other until a point of time at which supply of machining liquid to the wire electrode at a machining position becomes stable.

2. The machining method for a wire electric discharge machine according to claim 1, wherein the machining conditions comprise an ON-state period for which a voltage is applied to the wire electrode, an OFF-state period, and a machining liquid quantity.

3. The machining method for a wire electric discharge machine according to claim 1, wherein the point of time at which the wire electrode and the end face of the workpiece contact each other is detected by means of a voltage between the wire electrode and the workpiece.

4. The machining method for a wire electric discharge machine according to claim 1, wherein the point of time at which the supply of the machining liquid to the machining position of the wire electrode becomes stable is detected by means of a distance of the wire electrode from the end face of the workpiece.

5. The machining method for a wire electric discharge machine according to claim 4, wherein the distance of the wire electrode from the end face of the workpiece is detected as a distance over which the wire electrode is moved relative to the workpiece.

6. The machining method for a wire electric discharge machine according to claim 1, wherein the machining conditions once modified are restored to original conditions after the supply of the machining liquid to the wire electrode at a machining position is stabilized.

7. A wire electric discharge machine comprising:
contact point of time output means for outputting a point of time at which a wire electrode and an end face of a workpiece contact each other;
supply stable state point output means for outputting a point of time at which supply of machining liquid to a machining position of the wire electrode is stabilized; and
modifying means for modifying machining conditions of the wire electric discharge machine in accordance with an output of said contact time output means and an output of said supply stable state point output means.

8. The wire electric discharge machine according to claim 7, wherein said contact point of time output means detects change in a voltage between the wire electrode and the workpiece to provide an output.

9. The wire electric discharge machine according to claim 7, wherein said supply stable state point output means detects a distance of the wire electrode from a peripheral edge of the workpiece, and provides an output when the detected distance coincides with a set distance.

10. The wire electric discharge machine according to claim 9, wherein the distance detected by said supply stable state period output means is obtained as an amount of movement of moving means for moving the wire electrode or the workpiece.

11. The wire electric discharge machine according to claim 7, wherein said modifying means modifies the machining conditions responding to the output of said contact output means and restore the original machining conditions responding to the output of said supply stable state point output means.
